# EUROPEAN PATENT APPLICATION

(11) **EP 3 798 440 A1**
(43) Date of publication of application: **31.03.2021**
(21) Application number: 20194324.8
(22) Date of filing: 03.09.2020
(51) Int. Cl.: F02M 35/12, F02M 35/10, B32B 5/02, B32B 29/02, B32B 29/08

(54) **INTAKE DUCT**

(30) Priority: 25.09.2019 JP 2019174683
(71) Applicant: Roki Co., Ltd., Hamamatsu-shi, Shizuoka 431-3314 (JP)
(72) Inventor: ONODA, Tadayuki, Shizuoka, 431-3314 (JP); ICHIKAWA, Takayuki, Shizuoka, 431-3314 (JP); SEI, Shuhei, Shizuoka, 431-3314 (JP)
(74) Representative: Viering, Jentschura & Partner mbB Patent- und Rechtsanwälte

(57) **Abstract**

Provided is an intake duct including a silencing material that ensures intake-noise attenuation effect equivalent to that of a conventional one and that can be more easily manufactured. In an intake duct for introducing outside air into an internal combustion engine or an alternative power engine, the intake duct including a pipe wall formed of resin into a tubular shape, the pipe wall includes a silencing material that silences noise propagating in the intake duct, and the silencing material includes a skin layer formed from a non-woven fabric impregnated with thermosetting resin, the skin layer being disposed on an outer surface of each of front and back faces of the silencing material, and an air-permeability adjustment layer in which two or more layers of stretchable paper material are adjacently laminated, the stretchable paper material having a large number of irregularities formed on its surface between the skin layers.

## Description

### BACKGROUND OF THE INVENTION

### Field of the Invention

The present invention relates to an intake duct, particularly to an intake duct that reduces intake sound generated when outside air is introduced into an internal combustion engine or an alternative power engine.

### Description of the Related Art

Conventionally, in order to reduce intake noise generated in an intake system when outside air is introduced into an internal combustion engine such as a gasoline engine or an alternative power engine such as a fuel cell or a storage battery, it is known to provide a resonator in the intake passage to reduce noise at a specific frequency calculated based on Helmholtz resonance theory or the like, as well as to adopt various intake ducts that reduce intake noise.

The intake duct described in Japanese Patent Publication No. 5934709 is an intake duct for introducing outside air into an internal combustion engine or an alternative power engine, the intake duct having a pipe wall formed of resin into a tubular shape, wherein the pipe wall includes a silencing material in which a skin layer formed from a non-woven fabric impregnated with thermosetting resin and an air-permeability adjustment layer formed from stretchable paper material having a large number of irregularities formed on its surface are laminated, and wherein the silencing material is configured such that the skin layer is arranged on an outer surface of each of front and back faces of the silencing material, at least one pair of the air-permeability adjustment layers are laminated between the skin layers, and an intermediate layer made of the same material as that of the skin layer is sandwiched between the pair of the air-permeability adjustment layers.

Since the intake duct thus configured according to Japanese Patent Publication No. 5934709 includes a skin layer formed from a porous nonwoven fabric impregnated with thermosetting resin on the pipe wall of the intake duct formed into a tubular shape, the intake duct can exhibit sufficient heat resistance and water resistance, as well as achieve more effective intake-noise attenuation effect. Further, since adopting the porous non-woven fabric alone will increase air permeability, thereby increasing radiated sound, it is possible to adjust the air permeability into an appropriate range by laminating an air-permeability adjustment layer, thereby suppressing radiated sound.

However, according to the configuration of the conventional intake duct described above, the silencing material includes a pair of skin layers disposed on the outer surfaces, and the skin layers include a pair of air-permeability adjustment layers having an intermediate layer sandwiched therebetween. Therefore, problems existed in that the intake duct has a complicated structure which is at least a five-layer structure as a whole, and that it is difficult to control the amount of adhesive used when bonding the intermediate layer with the air-permeability adjustment layer to laminate them together.

### SUMMARY OF THE INVENTION

Accordingly, the present invention has been made in view of the above described problems, and a main object of the present invention is to provide an intake duct including a silencing material that ensures intake-noise attenuation effect equivalent to that of conventional art and that can be more easily manufactured.

The intake duct according to the present invention is an intake duct for introducing outside air into an internal combustion engine or an alternative power engine, the intake duct including a pipe wall formed of resin into a tubular shape, wherein the pipe wall includes a silencing material that silences noise propagating in the intake duct, and the silencing material includes a skin layer formed from a non-woven fabric impregnated with thermosetting resin, the skin layer being disposed on an outer surface of each of front and back faces of the silencing material, and an air-permeability adjustment layer in which two or more layers of stretchable paper material are adjacently laminated, the stretchable paper material having a large number of irregularities formed on its surface.

Further, in the intake duct according to the present invention, preferably, the air-permeability adjustment layer includes a first air-permeability adjustment layer and a second air-permeability adjustment layer having airflow resistance different from that of the first air-permeability adjustment layer.

Further, in the intake duct according to the present invention, preferably, the first air-permeability adjustment layer and the second air-permeability adjustment layer are laminated by being bonded together with an adhesive.

The above described summary of the invention does not enumerate all the necessary features of the present invention, and any subcombination of these feature groups can also be an invention.

According to the intake duct of the present invention, since the silencing material provided on the pipe wall includes the skin layer which is disposed on the outer surface of each of front and back faces, and which is formed from a non-woven fabric impregnated with thermosetting resin, and an air-permeability adjustment layer in which two or more layers of stretchable paper material having a large number of irregularities formed on its surface are adjacently laminated between the skin layers, and thus the intermediate layer is abolished, it is made possible to eliminate a step of controlling an adhesive associated with bonding of the intermediate layer, thereby enabling easier manufacturing of the silencing material.

Further, according to the intake duct of the present invention, since the air-permeability adjustment layer constituting the silencing material is provided with the first air-permeability adjustment layer and the second air-permeability adjustment layer having mutually different airflow resistance, it is possible to ensure intake-noise attenuation effect equivalent to that of the silencing material used in a conventional intake duct.

### BRIEF DESCRIPTION OF THE DRAWINGS

FIG. 1 is a schematic diagram showing an intake passage of an internal combustion engine;
FIG. 2 is a perspective view of an intake duct according to the present embodiment;
FIG. 3 is a perspective view of a half-round duct constituting the intake duct according to the present embodiment;
FIG. 4 is a sectional diagram to illustrate the structure of a silencing material; and
FIG. 5 is a graph showing sound reduction measured in a wide frequency band on a silencing material used in the intake duct of the present embodiment, and a conventional silencing material.

### DETAILED DESCRIPTION OF THE PREFERRED EMBODIMENTS

Hereinafter, preferred embodiments for carrying out the present invention will be described with reference to the drawings. It should be noted that the following embodiments do not limit the invention according to each claim, and that all the combinations of the features described in the embodiments are not necessarily essential to the solution of the invention.

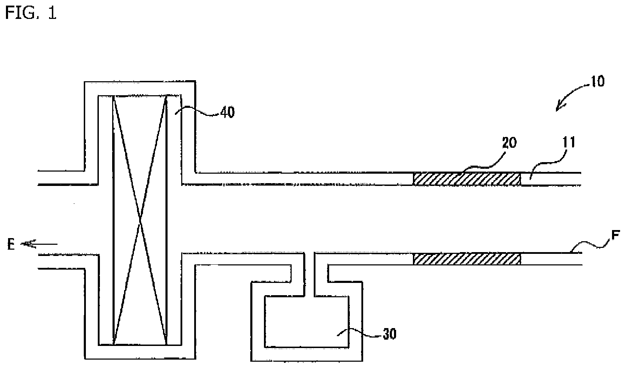

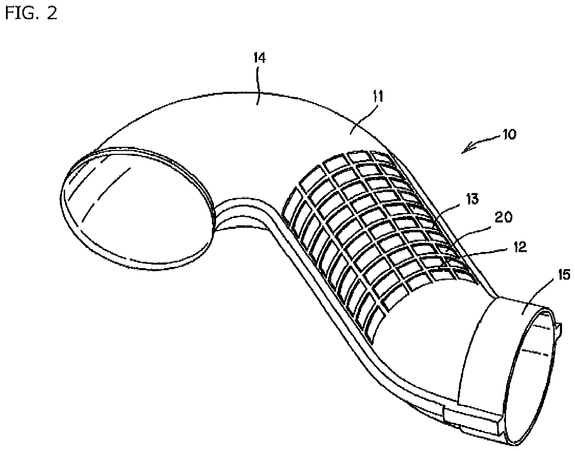

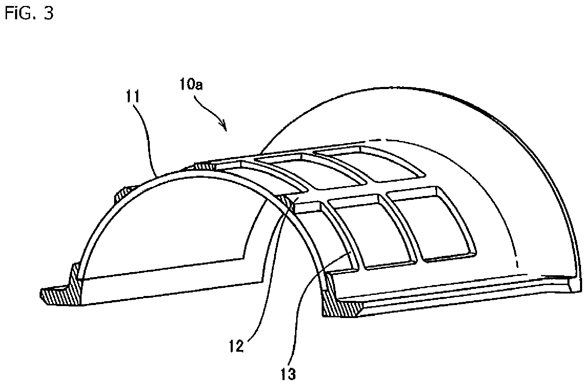

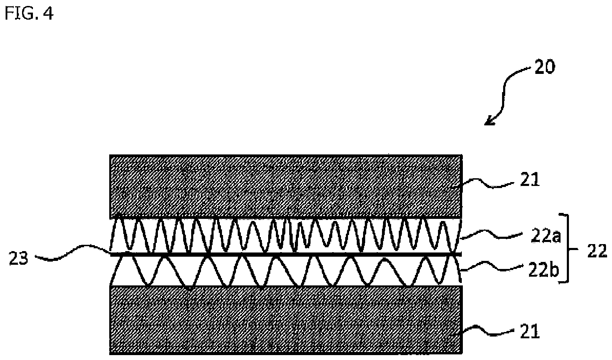

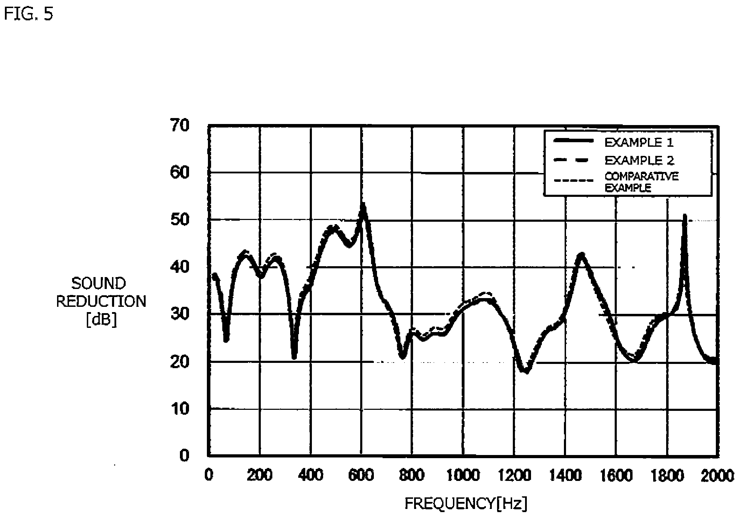

FIG. 1 is a schematic diagram showing an intake passage of an internal combustion engine; FIG. 2 is a perspective view of an intake duct according to the present embodiment; FIG. 3 is a perspective view of a half-round duct constituting the intake duct according to the present embodiment; FIG. 4 is a sectional diagram to illustrate the structure of a silencing material; and FIG. 5 is a graph showing sound reduction measured in a wide frequency band on a silencing material used in the intake duct of the present embodiment, and a conventional silencing material.

As shown in FIG. 1, an intake passage of an internal combustion engine is configured such that a resonator 30 is connected to an intake duct 10 formed from a pipe wall 11 of tubular shape between an intake port F and an air cleaner 40. The resonator 30 has a volume calculated based on Helmholtz resonance theory in order to reduce noise of a specific frequency, and by setting this volume to an appropriate value, it is made possible to reduce intake noise of the specific frequency generated in the intake passage. Further, in the intake duct 10 according to the present embodiment, as shown in FIG. 1, the silencing material 20 is formed on the pipe wall 11 on the intake port F side with respect to the resonator 30. By thus forming the silencing material 20 on the pipe wall 11 on the intake port side with respect to the resonator 30, it becomes possible to reduce intake noise more effectively. Note that the resonator 30 may not be provided as long as the intake noise can be sufficiently reduced only by the silencing material 20.

Next, the intake duct 10 according to the present embodiment will be described with reference to FIGS. 2 and 3. As shown in FIG. 2, the intake duct 10 according to the present embodiment has a pipe wall 11 formed of resin into a tubular shape. Further, since a part of the pipe wall 11 is formed from a lattice-shaped frame 12, a plurality of open portions 13 are formed in the pipe wall 11. The silencing material 20 is insert-molded so as to cover the open portions 13 so that the open portions 13 are closed. While the intake duct 10 according to the present embodiment is formed by insert-molding the silencing material 20, the synthetic resin material has not soaked into between the fibers of the silencing material 20, and therefore the silencing material 20, and the pipe wall 11 and the lattice-shaped frame 12 are joined to each other not as a result of the synthetic resin material being impregnated and solidified between the fibers of the silencing material 20, but by an anchor effect on the surface of the silencing material 20. Note that although, in the present embodiment, a case in which the silencing material 20 is insert-molded on the pipe wall 11 has been described, the silencing material 20 may be wound around the outer periphery of the intake duct 10 so as to cover the open portions 13.

As shown in FIG. 3, the pipe wall 11 in which the silencing material 20 is insert-molded forms the intake duct 10 by butting and joining half-round ducts 10a, 10a together. Thus forming the pipe wall 11 from the half-round ducts 10a will make it possible to insert-mold the silencing material 20 on the pipe wall 11 with ease. In addition, as shown in FIG. 2, an engine-side duct 14 and an intake-side duct 15 are respectively joined to ends of the half-round duct 10a in the ventilation direction to form a single intake duct 10. As the joining method, general methods used for resin molding such as vibration welding, hot plate welding, and ultrasonic welding, as well as bonding by adhesive, fastening by bolt, fitting of each half-round duct, a hollow product injection molding method (DSI: Die Slide Injection method) and the like can be applied. Note that the number of the open portions 13 and an opening area thereof can be changed as appropriate in consideration of the intake noise attenuating ability of the silencing material 20 to be used. Furthermore, since, as shown in FIG. 3, the silencing material 20 is insert-molded so as to be flush with the inner peripheral surface of the pipe wall 11, the inner peripheral surface of the pipe wall 11 can be formed to be flat allowing smooth flow of the fluid passing through the inside of the intake duct.

Next, with reference to FIG. 4, the configuration of the silencing material 20 will be described. The silencing material 20 includes a skin layer 21 formed from a non-woven fabric impregnated with thermosetting resin, and an air-permeability adjustment layer 22 formed from stretchable paper material having a large number of irregularities formed on its surface. The skin layers 21 are respectively disposed on the outer surfaces of the front and back faces of the silencing material 20, and are laminated so as to sandwich the air-permeability adjustment layer 22.

As the nonwoven fabric used for the skin layer 21, nonwoven fabrics having, as a base material, various fibers such as aramid fiber, imide fiber, polyvinyl chloride fiber, phenol fiber, rayon fiber, polyester fiber, polypropylene fiber, polyamide fiber, acrylic fiber, carbon fiber, glass fiber, alumina fiber (ceramic fiber), boron fiber, novoloid fiber, fluorine fiber, and metal fibers can be used.

Further, as the thermosetting resin to be impregnated into the nonwoven fabric, for example, urethane resin, melamine resin, thermosetting acrylic resin, particularly thermosetting acrylic resin that forms an ester bond by heating and cures, urea resin, phenol resin, epoxy resin, thermosetting polyester, or the like can be used.

Next, the air-permeability adjustment layer 22 will be described. The air-permeability adjustment layer 22 is formed from stretchable paper material as described above. The air-permeability adjustment layer 22 is laminated such that a first air-permeability adjustment layer 22a and a second air-permeability adjustment layer 22b having different airflow resistance are located adjacent to each other. It is preferable to configure such that the airflow resistance of the first air-permeability adjustment layer 22a is larger than the airflow resistance of the second air-permeability adjustment layer 22b. Further, any of the first air-permeability adjustment layer 22a or the second air-permeability adjustment layer 22b may be disposed on the outer surface side of the intake duct 10.

In this way, by laminating a plurality of air-permeability adjustment layers having different airflow resistance adjacent to each other, it is possible to arbitrarily set the airflow resistance of the air-permeability adjustment layer 22 as a whole, thus allowing more precise setting of airflow resistance.

Further, it is preferable that the first air-permeability adjustment layer 22a and the second air-permeability adjustment layer 22b are bonded to each other via an adhesive 23. Note that, as the adhesive 23, adhesives such as acrylic resin-based adhesives, urethane resin-based adhesives, epoxy resin-based adhesives, vinyl chloride resin solvent-based adhesives, chloroprene rubber-based adhesives, cyanoacrylate-based adhesives, silicone-based adhesives, modified silicone-based adhesives, and resorcinol-based adhesives can be used.

As the stretchable paper material used for the first air-permeability adjustment layer 22a and the second air-permeability adjustment layer 22b, creped paper having crepe-like wrinkles (wrinkle-like irregularities) formed on its surface, embossed paper having a large number of protrusions formed on its surface, and embossed and creped paper having crepe-like wrinkles and a large number of protrusions formed on its surface are used. Examples of the pulp used in the stretchable paper material include hardwood wood pulp, softwood wood pulp, hemp pulp, kenaf pulp, bamboo pulp, esbalt pulp, bagasse pulp, and reed pulp. In addition to these wood pulp and natural pulp such as non-wood pulp, a synthetic resin may be admixed in an amount of about 1 to 50%.

Next, the structure of the silencing material 20 according to the present embodiment will be described. As shown in FIG. 4, the silencing material 20 is integrally formed by laminating the air-permeability adjustment layer 22 with the skin layers 21 such that the outer surfaces of the air-permeability adjustment layer 22 are sandwiched between the skin layers 21, and thereafter hot pressing and hot-plate welding them together. Note that an adhesive may be interposed as needed between the skin layer 21 and the air-permeability adjustment layer 22. As the adhesive, as in the above described adhesion between the first air-permeability adjustment layer 22a and the second air-permeability adjustment layer 22b, acrylic resin-based adhesives, urethane resin-based adhesives, epoxy resin-based adhesives, vinyl chloride resin solvent-based adhesives, chloroprene rubber-based adhesives, cyanoacrylate-based adhesives, silicone-based adhesives, modified silicone-based adhesives, and resorcinol-based adhesives can be used.

Note that the silencing material 20 according to the present embodiment is adjusted to have a thickness of 1 to 3 mm after hot pressing, and an airflow resistance of 0.6 to 2.2 kPa·s/m.

Thus, since the silencing material 20 according to the present embodiment includes the skin layer 21 and the air-permeability adjustment layer 22 which is capable of setting finer airflow resistance, for adjusting an overall airflow resistance, it is possible to provide a silencing material that ensures intake-noise attenuation effect equivalent to that of a conventional art and that can be more easily manufactured.

### Examples

FIG. 5 is a graph showing sound reduction measured on an intake duct incorporating a conventional silencing material having a five-layer structure and an intake duct incorporating a silencing material having a four-layer structure according to the present embodiment. Comparison was made regarding the sound reduction for each frequency among examples, in which Example 1 used a silencing material in which the airflow resistance of the first air-permeability adjustment layer was set to 0.5 kPa·s/m and the airflow resistance of the second air-permeability adjustment layer to 0.3 kPa·s/m; Example 2 used a silencing material in which the airflow resistance of the first air-permeability adjustment layer was set to 0.3 kPa·s/m and the airflow resistance of the second air-permeability adjustment layer to 0.5 kPa·s/m; and Comparative Example used a silencing material having a five-layer structure in which an intermediate layer was sandwiched between the air-permeability adjustment layers as in a conventional silencing material.

As shown in FIG. 5, it was confirmed that Examples 1 and 2 exhibited equivalent silencing effect to that of Comparative Example in all frequency bands.

In this way, since the silencing material 20 incorporated in the intake duct 10 according to the present embodiment has the air-permeability adjustment layer 22 in which the air-permeability adjustment layers having different airflow resistance are adjacently laminated, there will be no difficulty in controlling the amount of adhesive used when bonding an intermediate layer with the air-permeability adjustment layer to laminate them as in a conventional five-layer structure in which the intermediate layer is provided between the air-permeability adjustment layers. Therefore, it is possible to provide an intake duct including a sound absorbing material that ensures intake-noise attenuation effect equivalent to that of a conventional one and that is more easily manufactured.

Note that although the intake duct 10 according to the present embodiment has been described on an example in which open portions 13 are formed by forming the pipe wall 11 from a lattice-shaped frame 12, the pipe wall 11 may be formed with a plurality of open portions as in a punching metal, or the pipe wall 11 may be formed from a mesh-like member.

Further, although the intake duct 10 according to the present embodiment has been described on an intake duct 10 that introduces the outside air into an internal combustion engine, the intake duct according to the present invention will not be limited thereto and can also be applied to an intake duct that introduces outside air for cooling an alternative power engine such as a fuel cell or a storage battery mounted on a vehicle body. In this case, the intake noise, which is made up of rotation noise and wind noise of the fan for introducing the outside air, has a higher frequency than that of the intake noise generated from the internal combustion engine.

Further, in the intake duct 10 according to the present embodiment, although description has been made on a case where the silencing material 20 is applied only to a straight portion of the pipe wall 11, the silencing material 20 can also be applied to a curved portion of the intake duct 10. It is apparent from the description of the claims that embodiments to which such alterations or improvements are made can be included in the technical scope of the present invention.

### Reference Signs List

10: Intake duct, 10a: Half-round duct, 11: Pipe wall, 12: Frame, 13: Open portion, 14: Engine-side duct, 15: Intake-side duct,20: Silencing material, 21: Skin layer, 22: Air-permeability adjustment layer, 22a: First air-permeability adjustment layer, 22b: Second air-permeability adjustment layer, 23: Adhesive, 30: Resonator, 40: Air cleaner, E: Internal combustion engine, F: Intake port.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

The entire disclosure of Japanese Patent Application No. 2019-174683 filed on September 25, 2019 including the specification, claims, drawings and summary is incorporated herein by reference in its entirety.

## Claims

1. An intake duct for introducing outside air into an internal combustion engine or an alternative power engine, the intake duct comprising a pipe wall formed of resin into a tubular shape, wherein
the pipe wall comprises a silencing material that silences noise propagating in the intake duct, and
the silencing material comprises a skin layer formed from a non-woven fabric impregnated with thermosetting resin, the skin layer being disposed on an outer surface of each of front and back faces of the silencing material, and an air-permeability adjustment layer in which two or more layers of stretchable paper material are adjacently laminated, the stretchable paper material having a large number of irregularities formed on its surface between the skin layers.

2. The intake duct according to claim 1, wherein
the air-permeability adjustment layer comprises a first air-permeability adjustment layer and a second air-permeability adjustment layer having airflow resistance different from that of the first air-permeability adjustment layer.

3. The intake duct according to claim 2, wherein
the first air-permeability adjustment layer and the second air-permeability adjustment layer are laminated by being bonded together with an adhesive.
